# EUROPEAN PATENT APPLICATION

(11) **EP 4 653 289 A1**
(43) Date of publication of application: **26.11.2025**
(21) Application number: 25161815.3
(22) Date of filing: 05.03.2025
(51) Int. Cl.: B62D 1/00, B62D 7/15

(54) **SYSTEM FOR VEHICLE STEERING AND METHOD THEREOF**

(30) Priority: 20.05.2024 KR 20240065180
(71) Applicant: Hyundai Mobis Co., Ltd., Gangnam-gu Seoul 06141 (KR)
(72) Inventor: KIM, Tae Hun, 16891 Gyeonggi-do (KR); AHN, Sung Joon, 16891 Gyeonggi-do (KR); CHOE, Seung Hyeong, 16891 Gyeonggi-do (KR)
(74) Representative: Vossius & Partner Patentanwälte Rechtsanwälte mbB

(57) **Abstract**

A system for vehicle steering according to an aspect of the present disclosure includes: a steering module (200), wherein a user terminal (300) is configured to be mountable on and dismountable from the same; a vehicle corner module (400) provided for each of wheels so that steering of each of the wheels may be independently operated; and a processor (100) configured to independently control steering of each of the wheels through the vehicle corner module (400) based on steering information received from the user terminal (300).

## Description

### BACKGROUND

### FIELD

Exemplary embodiments of the present disclosure relate to a system for vehicle steering and a method thereof.

### DISCUSSION OF THE BACKGROUND

An e-corner module (electronic corner module), which is one of the corner modules for vehicles, is an in-wheel system that places vehicle motors inside wheels, allowing each motor to individually drive respective wheels. The e-corner module is a modular system in which a chassis unit, performing integrated functions of driving, braking, steering, and suspension, is configured for each wheel. With the recent development of new mobility concepts led by global automotive parts manufacturers, the e-corner module and technologies that utilize the same to implement various driving modes have been developed.

One of the features of the e-corner module is its wide steering angle range, which enables a variety of driving modes for vehicles. For example, crab driving, in which a vehicle moves laterally to perform parallel parking, and zero turn driving, in which the vehicle changes direction on the spot without reversing, may prevent physical collisions with an external vehicle or structure. In addition, diagonal driving, in which the drive shafts of each wheel are steered in the same direction to drive diagonally, may improve the vehicle's driving stability.

The use of driving technologies described above may enhance the driver's convenience during driving or parking the vehicle in a tight space. However, issues arise when the driver exits the vehicle after completing driving or, conversely, when entering the vehicle to initiate driving. For example, if the driver completes parking in a tight space through crab driving but there is no sufficient space for the driver to exit the vehicle, or if there was sufficient space at the time of parking but the parking environment later changes (e.g., narrow parking on both sides), the driver may find it challenging to exit or enter the vehicle.

As such, even though the e-corner module is utilized to enhance the convenience of driving or parking the vehicle, drivers may still experience inconveniences when entering and exiting the vehicle, and there are no available technologies to resolve these issues.

The related art of the present disclosure is disclosed in Korean Patent Application Publication No. 10-2021-0070926 (published on September 27, 2021).

### SUMMARY

According to an aspect of the present disclosure, there are provided a system for vehicle steering and a method thereof, which may enable control of vehicle steering inside and outside a vehicle through remote control of a corner module for a vehicle by utilizing a user terminal.

A system for vehicle steering according to an embodiment of the present disclosure includes: a steering module, wherein a user terminal is configured to be mountable on and dismountable from the same; a vehicle corner module provided for each of wheels so that steering of each of the wheels may be independently operated; and a processor configured to independently control steering of each of the wheels through the vehicle corner module based on steering information received from the user terminal.

In the system for vehicle steering according to an embodiment of the present disclosure, while the vehicle is driving, the processor receives a steering angle through a gyro sensor embedded in the user terminal and controls an operation of the vehicle corner module to perform normal driving, diagonal driving, turn driving, and reverse-phase driving of the vehicle.

In the system for vehicle steering according to an embodiment of the present disclosure, while the vehicle is engaged in path-based driving, the processor identifies a travel path of the vehicle and controls rear wheel steering for the next path-based driving.

In the system for vehicle steering according to an embodiment of the present disclosure, while the vehicle is stationary, the processor receives touch input of a driver through the user terminal and controls an operation of the vehicle corner module to perform crab driving, pivot turn driving, and zero turn driving of the vehicle.

In the system for vehicle steering according to an embodiment of the present disclosure, the crab driving, pivot turn driving, and zero turn driving of the vehicle are performed even when the user terminal is dismounted from the steering module.

In the system for vehicle steering according to an embodiment of the present disclosure, during the crab driving of the vehicle, the processor displays, through the user terminal, locations where the crab driving is possible and controls the vehicle driving to a location received through drag input of the driver.

In the system for vehicle steering according to an embodiment of the present disclosure, during the pivot turn driving of the vehicle, upon receiving drag input in a clockwise or counterclockwise direction through the user terminal, the processor displays a possible candidate status and performs pivot turn driving by fixing one module, among the vehicle corner modules, selected through user input.

In the system for vehicle steering according to an embodiment of the present disclosure, during the zero turn driving of the vehicle, upon receiving, through the user terminal, rotation input based on a plurality of touch inputs, the processor controls rotation of the vehicle by a rotation angle corresponding to the rotation input.

In the system for vehicle steering according to an embodiment of the present disclosure, upon detecting that the user terminal has been demounted from the steering module while the vehicle is driving, the processor executes departed driver rescue & exit maneuver to park on a shoulder of a road through slow driving and autonomous driving.

A method for vehicle steering according to an embodiment of the present disclosure includes: determining, by a processor, a driving status of a vehicle; receiving, by the processor, steering information from a user terminal; and controlling independently, by the processor, steering of each of wheels through a vehicle corner module depending on whether the user terminal is mounted or dismounted from a steering module, wherein the vehicle corner module is provided for each of the wheels and configured to independently operate the steering of each of the wheels.

According to an embodiment of the present disclosure, the present disclosure may enable the driver to control steering by utilizing the user terminal, such as a smartphone or tablet, which may be mounted on and dismounted from the steering module, thereby enhancing driving convenience.

According to an embodiment of the present disclosure, the present disclosure may enable vehicle control from outside the vehicle through the user terminal dismounted from the steering module, thereby implementing automated parking technology while simultaneously enhancing the utilization of a narrow road or parking area.

According to an embodiment of the present disclosure, the present disclosure may control the driving mode of the vehicle depending on whether the user terminal is mounted on or dismounted from the steering module, thereby improving the driver's safety during vehicle operation.

### BRIEF DESCRIPTION OF THE DRAWINGS

FIG. 1 is a block diagram illustrating a system for vehicle steering according to an embodiment of the present disclosure.
FIG. 2 is an exemplary view illustrating normal driving of the system for vehicle steering according to an embodiment of the present disclosure.
FIG. 3 is an exemplary view illustrating diagonal driving of the system for vehicle steering according to an embodiment of the present disclosure.
FIG. 4 is an exemplary view illustrating reverse-phase driving of the system for vehicle steering according to an embodiment of the present disclosure.
FIG. 5 is an exemplary view illustrating crab driving of the system for vehicle steering according to an embodiment of the present disclosure.
FIGS. 6 to 8 are exemplary views illustrating pivot turn driving of the system for vehicle steering according to an embodiment of the present disclosure.
FIG. 9 is an exemplary view illustrating zero turn driving of the system for vehicle steering according to an embodiment of the present disclosure.
FIG. 10 is an exemplary view illustrating driving modes of the system for vehicle steering and a method thereof according to an embodiment of the present disclosure.
FIG. 11 is a flowchart illustrating the method for vehicle steering according to an embodiment of the present disclosure.

### DETAILED DESCRIPTION OF THE ILLUSTRATED EMBODIMENTS

Exemplary embodiments of a system for vehicle steering and a method thereof according to the present disclosure will be described below with reference to the accompanying drawings. It should be considered that the thickness of each line or the size of each component in the drawings may be exaggeratedly illustrated for clarity and convenience of description.

In describing the present disclosure herein, the terms "connected" and "linked" between individual components are intended to include not only direct connections, but also connections made through intermediaries while retaining their properties to a certain extent. The terms "transmitted," "output," and the like for individual signals or information are also intended to include not only their direct meanings but also indirect meanings through intermediaries while retaining properties of signals to a certain extent. In addition, the terms as used herein are defined in consideration of functions of the present disclosure, and these terms may change depending on a user or operator's intention or practice. Therefore, definitions of these terms will have to be made based on the content herein.

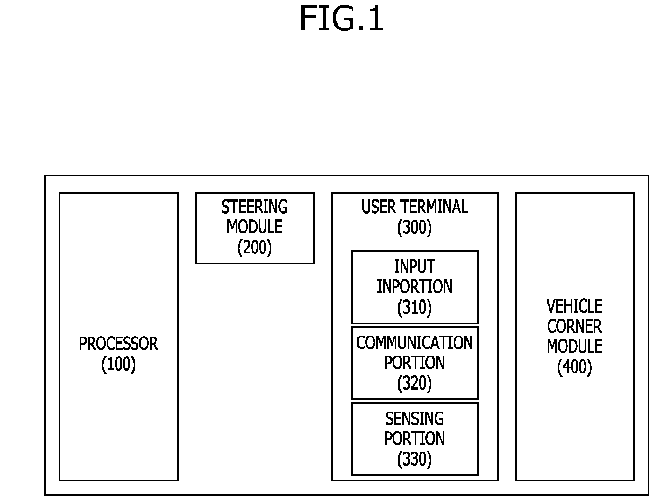

FIG. 1 is a block diagram illustrating a system for vehicle steering according to an embodiment of the present disclosure.

First, referring to FIG. 1, the system for vehicle steering according to an embodiment of the present disclosure may include a processor 100, a steering module 200, a user terminal 300, and a vehicle corner module 400.

The processor 100 may be linked to the user terminal 300 and the vehicle corner module 400, and may function as an element that controls an operation of the vehicle corner module 400.

In the present embodiment, the processor 100 may function as an entity that controls the operation of the vehicle corner module 400 based on whether the user terminal 300 is mounted on or dismounted from the steering module 200, a driving status of a vehicle, and driving information input by the user terminal 300, and may include a memory (not illustrated).

The processor 100 may be implemented in an electronic control unit (ECU), a central processing unit (CPU), or a system on chip (SoC) applied to a vehicle, may run an operating system or an application to control a plurality of hardware or software components associated with the processor 100, and may perform various data processing and computations. The processor 100 may be configured to execute at least one instruction stored in the memory and to store the resulting data in the memory.

The memory may store a vehicle travel path, information on the operation control of the vehicle corner module 400 by the processor 100, and steering information input by the user terminal 300.

The memory may include storage media such as random access memory (RAM), non-volatile memory such as random access memory (ROM) and electrically erased programmable ROM (EEPROM), flash memory, HDD, SDD, and SSD. In some embodiments, the memory in which data is stored and the memory in which commands (algorithms) are stored may be implemented in physically and/or logically separate configurations.

In addition, the processor 100 may include a sensor (not illustrated). The sensor may correspond to a camera, a lidar, and the like, but is not limited thereto, and may include a sensor used to measure a distance, such as a radar.

The sensor may sense a spatial area in which the vehicle is to drive and generate sensing data including driving status information, driving environment information, and the like of the vehicle. The generated sensing data may be transmitted to the processor 100 as basic data for measuring a spatial area in which the vehicle may perform crab driving, pivot turn driving, or zero turn driving by using the vehicle corner module 400, which will be described later.

The steering module 200 may correspond to a mechanical configuration or a configuration that allows the user terminal 300 to be mounted by magnetic force. The steering module 200 may correspond to a steering wheel, and may include an angle sensor (not illustrated). The angle sensor may function as an element that is used to measure the number of rotations or the rotation angle of the steering module 200.

The user terminal 300 may function as an element that receives touch or drag input from a driver regarding the operation of the vehicle corner module 400 and transmits the input as driving information to the processor 100.

The user terminal 300 may correspond to a smartphone, a tablet, or the like, and may include an input portion 310, a communication portion 320, and a sensing portion 330.

The input portion 310 may correspond to an element that generates an input signal in response to a driver's operation (e.g., touch input or drag input), and, simultaneously, may correspond to an element that performs the function of a display portion showing a driving mode of the vehicle corner module 400. The input portion 310 may receive driving mode input from a user by showing the driving mode of the vehicle corner module 400 through a vehicle image.

The communication portion 320 may perform a function of transmitting steering information received from the driver to the processor 100 through a controller area network (CAN), Ethernet, or WiFi communication. The sensing portion 330 may be composed of any one of an acceleration sensor, a gyro sensor, and a gravity sensor to detect a physical rotation value applied by the driver.

The vehicle corner module 400 may correspond to an element that receives a steering signal from the processor 100 and independently controls steering of each wheel of the vehicle. The vehicle corner module 400 may include a steering motor for independent steering of the wheels, and may also be configured to include an in-wheel motor, a brake disc and a brake caliper, a suspension arm, and a shock absorber as independent drive, braking, and suspension devices for the wheels.

In the present embodiment, the number of the vehicle corner modules 400 may be, but is not limited to, four as in a typical vehicle, and may be the same as the number of wheels provided in the vehicle to which the vehicle corner modules 400 are applied.

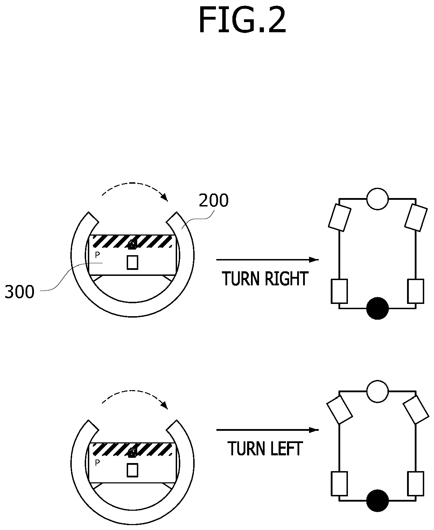

Based on the foregoing, referring to FIGS. 2 to 10, the configuration of the present embodiment will be described in detail below for each driving mode, with a focus on the system for vehicle steering using the processor 100.

### 1. Normal Driving

FIG. 2 is an exemplary view illustrating normal driving of the system for vehicle steering according to an embodiment of the present disclosure.

Referring to FIG. 2, when the processor 100 detects that the user terminal 300 is mounted on the steering module 200, the processor 100 may perform normal driving.

When the user terminal 300 is mounted on the steering module 200, an operation mode of the user terminal 300 is switched to a steering mode, and functions other than functions related to vehicle steering may be deactivated for the safety of vehicle operation.

The processor 100 may calculate a steering angle based on the number of rotations of the steering module 200 or through a gyro sensor embedded in the user terminal 300.

The processor 100 may control the operation of the vehicle corner module 400 by transmitting a signal to the vehicle corner module 400 based on the calculated steering angle.

### 2. Diagonal Driving

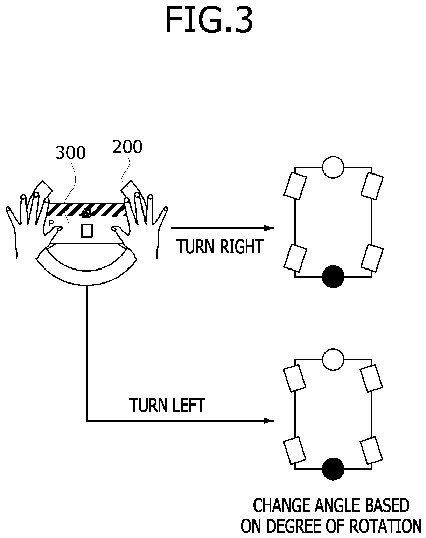

FIG. 3 is an exemplary view illustrating diagonal driving of the system for vehicle steering according to an embodiment of the present disclosure.

Referring to FIG. 3, with the user terminal 300 mounted on the steering module 200, the processor 100 may perform diagonal driving by receiving steering information (e.g., steering angle) and touch input from a driver through the user terminal 300.

For example, when the driver turns left or right while touching the input portion 310 of the user terminal 300 with the thumbs of both hands, the processor 100 may generate a diagonal driving initiation signal in the corresponding direction based on the steering angle calculated through the gyro sensor of the user terminal 300 in conjunction with the driver's touch input.

In the present embodiment, the processor 100 may generate a diagonal driving initiation signal when the steering angle is at or below 10 degrees. The steering angle at which diagonal driving may be initiated is not limited thereto, and the processor 100 may initiate diagonal driving based on a steering angle value that may distinguish diagonal driving from reverse-phase driving or turning driving, which will be described later.

Upon receiving the diagonal driving initiation signal transmitted from the processor 100, the vehicle corner module 400 operates to steer front and rear wheels in-phase to perform diagonal driving. In this case, the vehicle corner module 400 may control the steering angle of the front and rear wheels to correspond to the steering angle received from the processor 100, that is, the degree of rotation of the steering module 200.

When the processor 100 detects that the steering angle becomes 0 degrees after initiating diagonal driving, the processor 100 may stop the operation of the rear wheel steering through the vehicle corner module 400 and operate the vehicle in the normal driving mode.

### 3. Reverse-phase Driving or Turning Driving

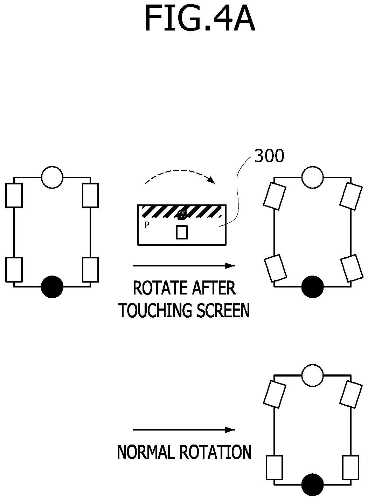

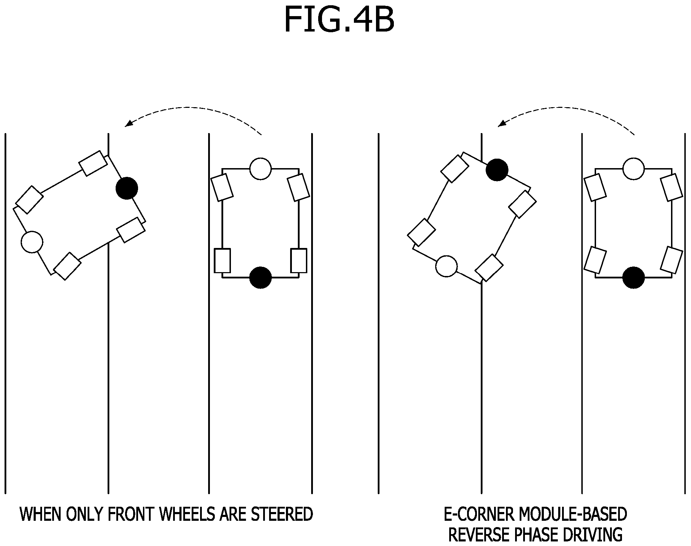

FIG. 4 is an exemplary view illustrating reverse-phase driving of the system for vehicle steering according to an embodiment of the present disclosure.

Referring to (a) in FIG. 4, with the user terminal 300 mounted on the steering module 200, the processor 100 may perform turning driving or reverse-phase driving by receiving steering information (e.g., steering angle) and touch input from a driver through the user terminal 300. For example, when the driver turns left or right while touching the input portion 310 of the user terminal 300 with the thumbs of both hands, the processor 100 may generate a turning driving initiation signal or a reverse-phase driving initiation signal in the corresponding direction based on the steering angle calculated through the gyro sensor of the user terminal 300 in conjunction with the driver's touch input.

In the present embodiment, the processor 100 may generate a turning driving initiation signal when the steering angle is above 10 degrees to below 540 degrees, and a reverse-phase driving initiation signal when the steering angle is at or above 540 degrees. The steering angle at which turning driving or reverse-phase driving may be initiated is not limited thereto, and the processor 100 may initiate turning driving or reverse-phase driving based on a steering angle value that may mutually distinguish turning driving or reverse-phase driving from the diagonal driving described above.

The processor 100 may transmit the turning or reverse-phase driving initiation signal to the vehicle corner module 400. Specifically, upon receiving the turning or reverse-phase driving initiation signal from the processor 100, the vehicle corner module 400 may steer vehicle wheels such that the front and rear wheels are in reverse-phase to perform reverse-phase driving.

In this case, the vehicle corner module 400 may control the steering angle of the front and rear wheels to correspond to the steering angle received from the processor 100, that is, the degree of rotation of the steering module 200 or the rotation angle detected by the gyro sensor of the user terminal 300.

Referring to (b) in FIG. 4, in a situation where a vehicle is performing a U-turn, when comparing the case where only the front wheels are steered with the case where the rear wheels are controlled in reverse-phase to the front wheels through the vehicle corner module 400, it may be observed that the case of reverse-phase driving allows the vehicle to have relatively more space to perform the U-turn.

In addition, if the processor 100 detects, through a sensor, a situation requiring rear-wheel steering (e.g., lack of space due to a double-parked vehicle or an obstacle during a U-turn), the processor 100 may control the vehicle corner module 400 to perform reverse-phase driving for safety or accident prevention even without touch input from the driver, that is, without driver intervention.

In the present embodiment, when the vehicle is engaged in path-based driving, the processor 100 may identify a travel path of the vehicle and control the rear wheel steering for the next path-based driving. For example, if the next path is a left turn, the processor 100 may guide the vehicle into a first or second lane by turning the rear wheels to the right through the vehicle corner module 400 during turning driving. For example, an embodiment may be provided where if the next path is a right turn, the processor 100 may guide the vehicle into a third or fourth lane by turning the rear wheels to the left through the vehicle corner module 400 during turning driving.

In the previous embodiments, the driving modes in which the processor 100 may control the vehicle only when the user terminal 300 is mounted on the steering module 200 are described. However, the following will describe driving modes in which the user terminal 300 is demounted from the steering module 200, that is, a driver inputs steering information of the vehicle through the user terminal 300 from outside the vehicle so that the processor 100 may remotely control the vehicle.

### 4. Crab Driving

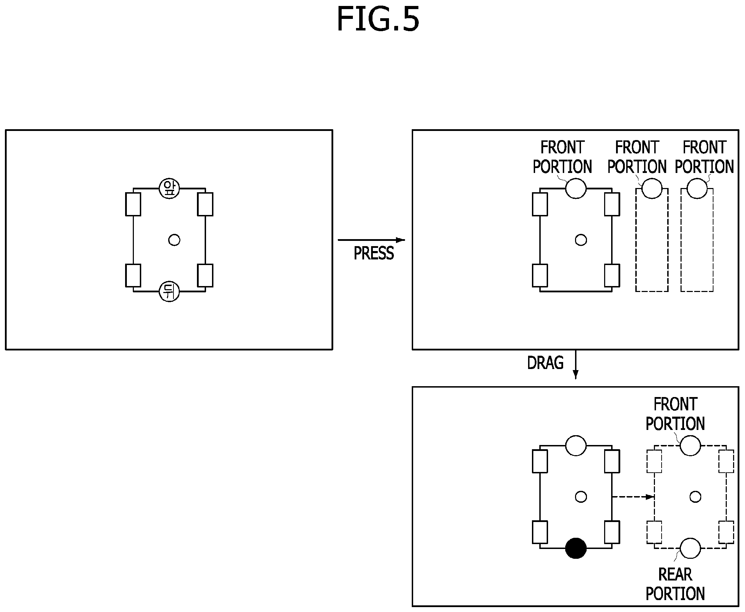

FIG. 5 is an exemplary view illustrating crab driving of the system for vehicle steering according to an embodiment of the present disclosure.

Referring to FIG. 5, the processor 100 may receive drag input in a left and right horizontal direction from a driver through the user terminal 300 and perform crab driving (parallel driving) in the direction of the received input.

In performing crab driving, the processor 100 may receive surrounding situation sensing information through a sensor (e.g., an around view camera or a lidar) to measure a range within which the vehicle may perform crab driving, and accordingly may determine locations where the vehicle may move through crab driving and transmit the locations to the driver through the user terminal 300.

Specifically, when the driver performs drag input in a left and right direction through the input portion 310 of the user terminal 300, the processor 100 may display, on the user terminal 300, the locations where parallel movement of the vehicle is possible. The driver may stop the drag input at a desired location for parallel movement among the locations, where parallel movement is possible, displayed on the input portion 310.

The processor 100 may initiate crab driving up to the location where the driver lifts the hands from the input portion 310, and may generate a crab driving initiation signal when the driver stops the drag input.

The processor 100 may transmit the crab driving initiation signal to the vehicle corner module 400, and the vehicle corner module 400 may perform crab driving by driving each wheel in parallel in response to the transmitted signal.

When the vehicle has completed moving to the location input by the driver, the processor 100 may end crab driving by controlling the vehicle corner module 400 to return each wheel to a straight line.

### 5. Pivot Turn Driving

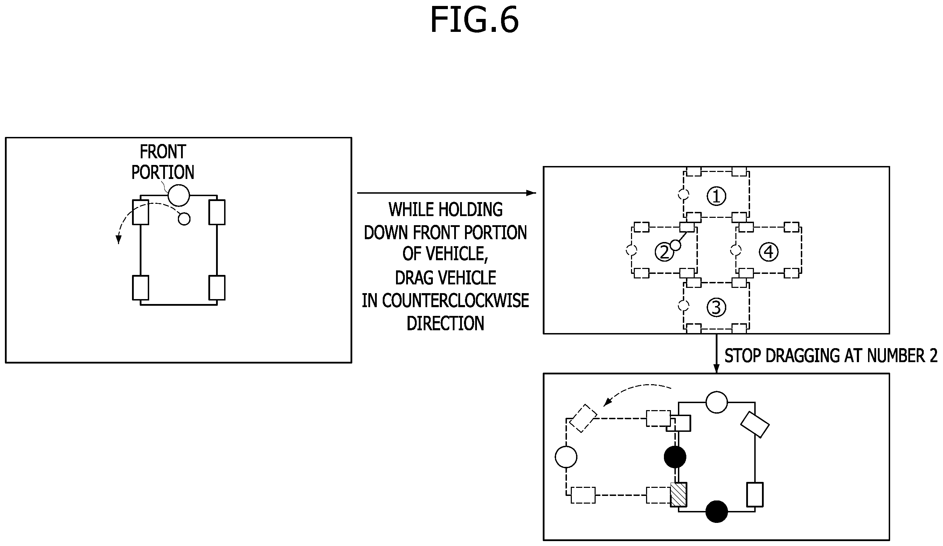

FIGS. 6 to 8 are exemplary views illustrating pivot turn driving of the system for vehicle steering according to an embodiment of the present disclosure.

Referring to FIGS. 6 to 8, the processor 100 may receive drag input in a clockwise or counterclockwise direction from a driver through the user terminal 300 and perform pivot turn driving with the smallest possible rotation range in the rotation direction of the received input.

In performing pivot turn driving, the processor 100 may receive surrounding situation sensing information through a sensor (e.g., an around view camera or a lidar) to measure a range within which the vehicle may rotate, and accordingly may display the range within which the vehicle may rotate on the user terminal 300 to transmit the range to the driver.

Referring to FIG. 6, when the driver performs drag input through the input portion 310 of the user terminal 300, the processor 100 may transmit, through the user terminal 300, to the driver a status after completing pivot turn driving in which each wheel of the vehicle is fixed. In this case, the driver may stop the drag input at a desired direction or location for rotation among the locations, where rotation is possible, displayed on the input portion 310, and accordingly, the processor 100 may generate a pivot turn driving initiation signal.

(1) Clockwise Rotation

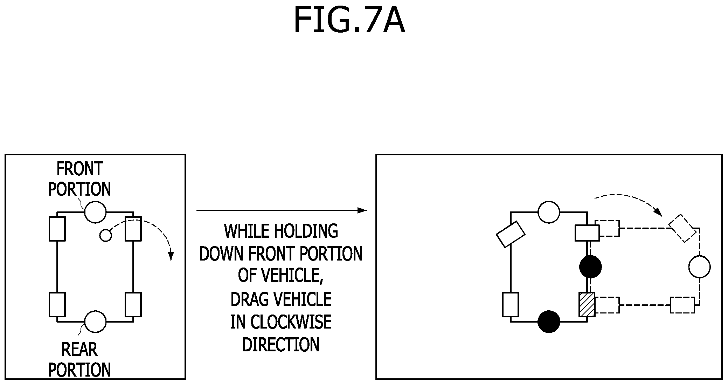

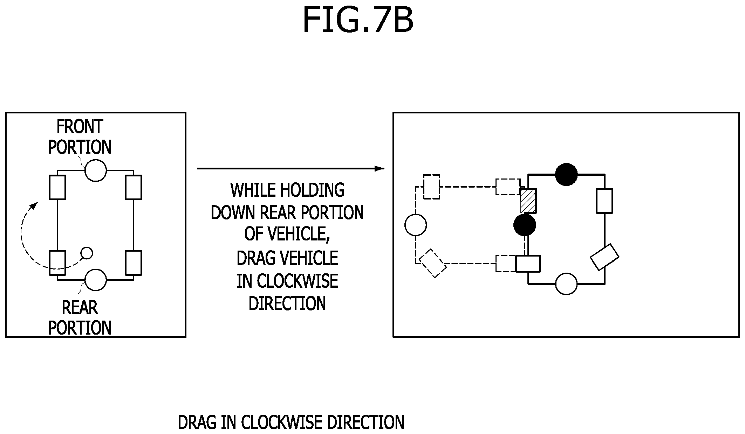

Specifically, with respect to a vehicle image displayed on the input portion 310 of the user terminal 300, upon receiving input from a driver holding down a front portion of the vehicle image and dragging the same in a clockwise direction, the processor 100 may rotate the vehicle by 90 degrees to the right with the smallest possible rotation range by fixing a wheel corresponding to the right rear wheel of the vehicle corner module 400 ((a) in FIG. 7).

In addition, upon receiving input from the driver holding down a rear portion of the vehicle image and dragging the same in a clockwise direction, the processor 100 may rotate the vehicle by 90 degrees to the left with the smallest possible rotation range by fixing a wheel corresponding to the left front wheel of the vehicle corner module 400 ((b) in FIG. 7).

### (2) Counterclockwise Rotation

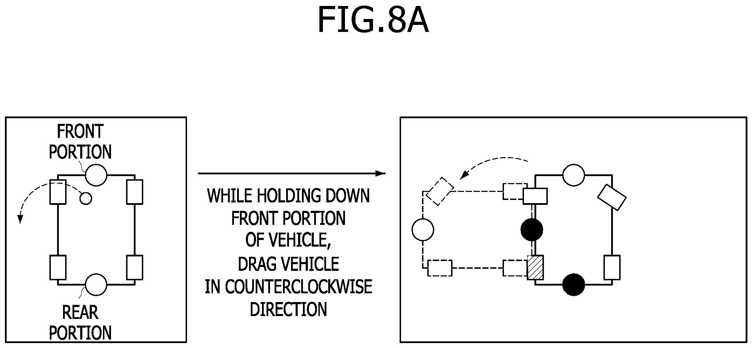

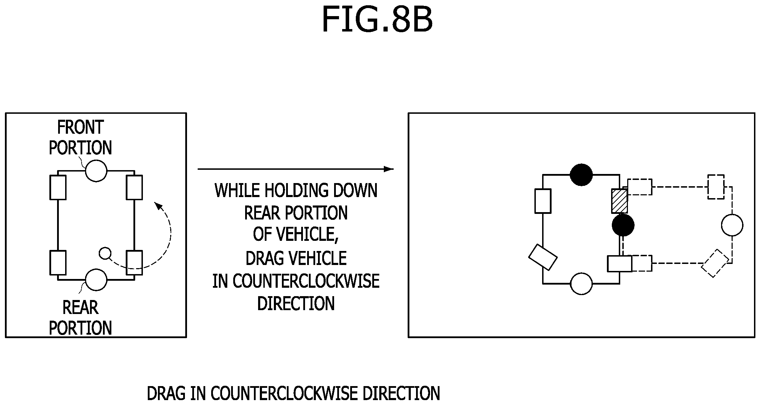

With respect to a vehicle image displayed on the input portion 310 of the user terminal 300, upon receiving input from a driver holding down a front portion of the vehicle image and dragging the same in a counterclockwise direction, the processor 100 may rotate the vehicle by 90 degrees to the left with the smallest possible rotation range by fixing a wheel corresponding to the left rear wheel of the vehicle corner module 400 ((a) in FIG. 8).

Similarly, upon receiving input from the driver holding down a rear portion of the vehicle image and dragging the same in a counterclockwise direction, the processor 100 may rotate the vehicle by 90 degrees to the right with the smallest possible rotation range by fixing a wheel corresponding to the right front wheel of the vehicle corner module 400 ((b) in FIG. 8).

When the rotation is completed, the processor 100 may notify the driver of the completed steering status through the user terminal 300, and may complete the pivot turn driving by returning each wheel of the vehicle corner module 400 to a straight line.

### 6. Zero Turn Driving

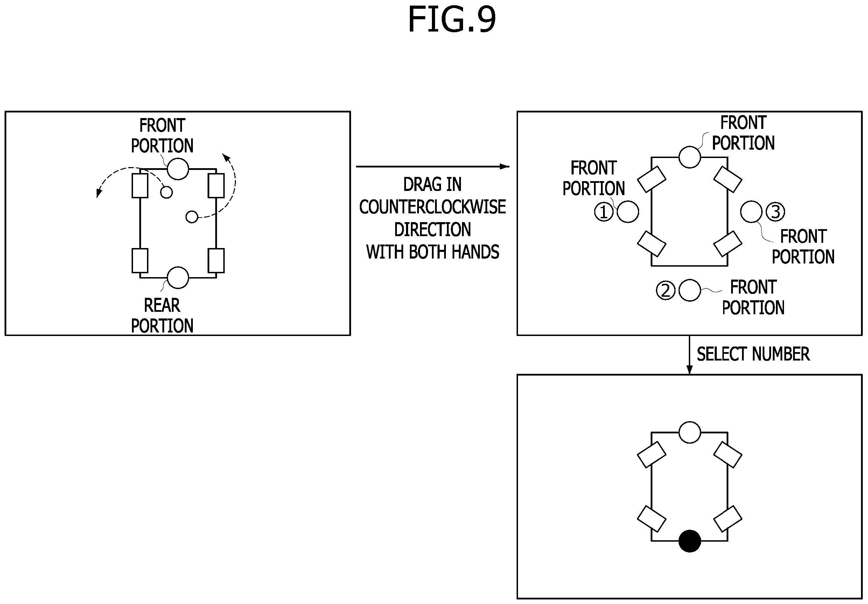

FIG. 9 is an exemplary view illustrating zero turn driving of the system for vehicle steering according to an embodiment of the present disclosure.

Referring to FIG. 9, the processor 100 may receive drag input in a clockwise or counterclockwise direction by both hands from a driver through the user terminal 300 and perform zero turn driving in which the vehicle rotates on the spot in the rotation direction of the received input.

In performing zero turn driving, the processor 100 may receive surrounding situation sensing information through a sensor (e.g., an around view camera or a lidar) to measure, based on the sensing information, a direction and a range in which the vehicle may rotate, and accordingly may display the direction and the range on the user terminal 300 to transmit the direction and the range to the driver. The processor 100 may receive information on the rotation direction and range from the driver and accordingly generate a zero turn driving initiation signal.

Specifically, the processor 100 may perform on-the-spot turn, i.e., zero turn driving, of the vehicle by making, through the vehicle corner module 400, left and right front wheels face each other in a reverse-phase state and left and right rear wheels face away from each other in a reverse-phase state.

When the on-the-spot rotation is completed, the processor 100 may complete the zero turn driving by returning each wheel of the vehicle corner module 400 to a straight line.

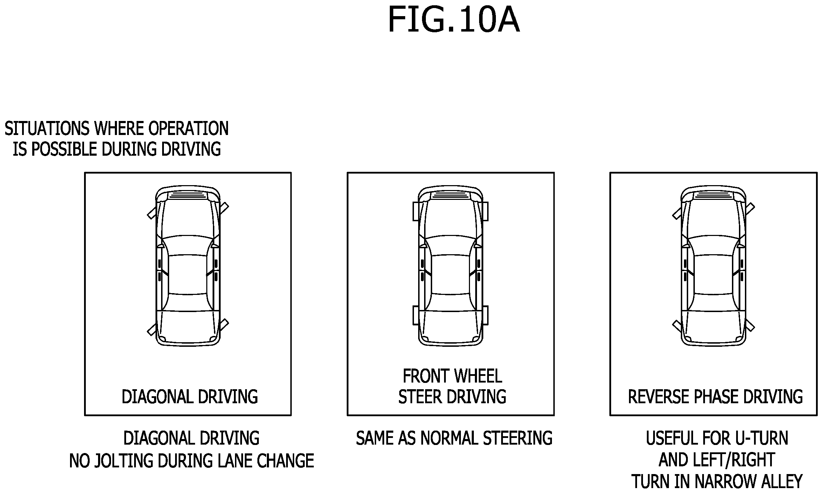

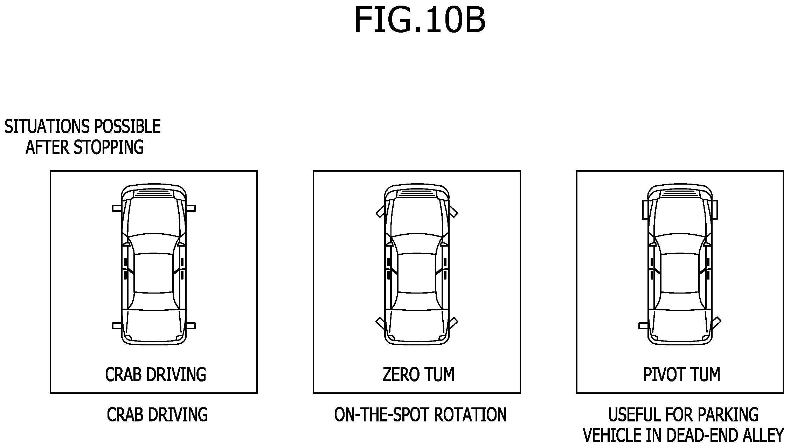

FIG. 10 is an exemplary view illustrating driving modes of the system for vehicle steering and a method thereof according to an embodiment of the present disclosure.

Referring to FIG. 10, as described above, the processor 100 may control the operation of the vehicle corner module 400 to implement various driving modes, such as diagonal driving, reverse-phase driving, crab driving, zero turn driving, and pivot turn driving, depending on whether the vehicle is driving or stationary.

### 7. Departed Driver Rescue & Exit Maneuver (DDREM)

When the processor 100 detects that the user terminal 300 has been demounted from the steering module 200 while the vehicle is driving, the processor 100 may execute departed driver rescue & exit maneuver to park on a shoulder of a road through slow driving and autonomous driving.

The departed driver rescue & exit maneuver performed by the processor 100 may correspond to a system that, in the event of an emergency during vehicle operation, switches the vehicle driving mode to an autonomous driving mode and moves the vehicle to a safe location, such as a shoulder of a road, and brings the vehicle to a stop.

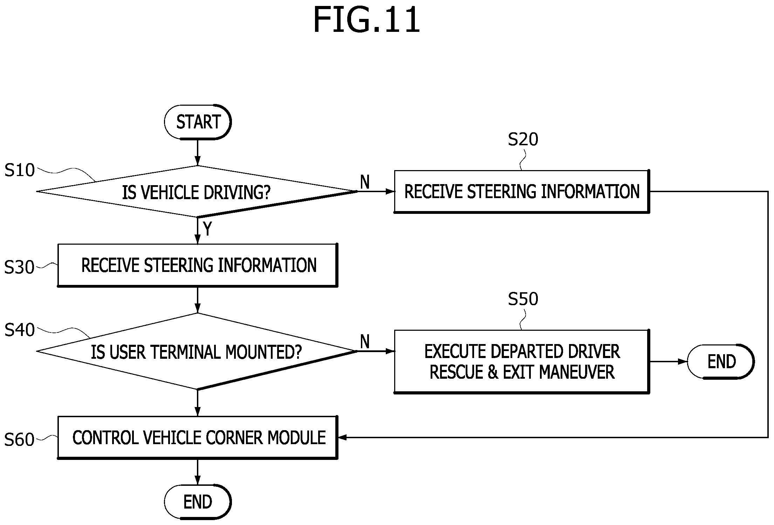

FIG. 11 is a flowchart illustrating the method for vehicle steering according to an embodiment of the present disclosure.

Based on the foregoing, referring to FIG. 11, the configuration of the present embodiment will be described in detail below, with a focus on the method for vehicle steering using the processor 100.

First, the processor 100 may determine a driving status of the vehicle (S10).

The processor 100 may determine a current speed of the vehicle and control the operation of the vehicle corner module 400 differently depending on whether the vehicle is driving or stationary (e.g., 0 km/h). For example, if the vehicle is currently driving, the processor 100 may receive steering information through the user terminal 300 and control the vehicle corner module 400 to perform only normal driving, diagonal driving, or reverse-phase driving. Conversely, if the vehicle is currently in a stationary state, the processor 100 may control the vehicle corner module 400 to perform only crab driving, pivot turn driving, or zero turn driving.

Next, the processor 100 may receive steering information from the user terminal 300 (S20 and S30).

In steps S20 and S30, the steering information received by the processor 100 may include a rotation angle of the steering module 200 or a steering angle acquired by the gyro sensor embedded in the user terminal 300, and may include a driver's touch input or drag input received through the input portion 310 of the user terminal 300.

Specifically, in step S20, the processor 100 may calculate a steering angle based on the steering information and control the performance of normal driving, diagonal driving, turning driving, or reverse-phase driving, and in step S30, the processor 100 may perform crab driving, pivot turn driving, or zero turn driving in response to a corresponding location or direction received through the driver's touch or drag input.

The processor 100 may determine whether the user terminal 300 is mounted on or dismounted from the steering module 200 (S40). The processor 100 may detect whether the user terminal 300 is mounted on or dismounted through a sensor of the steering module 200.

In addition, when the processor 100 detects that the user terminal 300 has been demounted from the steering module 200 while the vehicle is driving, the processor 100 may execute departed driver rescue & exit maneuver to park on a shoulder of a road through slow driving and autonomous driving (S50).

The processor 100 may independently control the steering of each of the wheels through the vehicle corner module 400, and the vehicle corner module 400 is provided for each of the wheels so that the steering of each of the wheels may be independently operated (S60).

The control of the vehicle corner module 400 by the processor 100 and each of the normal driving, diagonal driving, turning driving, reverse-phase driving, crab driving, pivot turn driving, and zero turn driving performed accordingly have already been described above, and the same descriptions will not be repeated.

As such, according to the present embodiments, by utilizing the user terminal that may be mounted on and dismounted from the steering module, the driver may control the steering of the vehicle, thereby enhancing driving convenience. In addition, by enabling vehicle control from outside the vehicle through the user terminal dismounted from the steering module, driver convenience may be enhanced while simultaneously enhancing the utilization of a narrow road or parking area. The driving of the vehicle may be controlled depending on whether the user terminal is mounted on or dismounted from the steering module, thereby improving the driver's safety during vehicle operation.

The term "module" as used herein may include a unit implemented in hardware, software, or firmware, and may be used interchangeably with terms such as, for example, logic, logic block, component, or circuit. A module may be an integrally configured component or a minimal unit or portion of the component that performs one or more functions. For example, according to an embodiment, a module may be implemented in the form of an application-specific integrated circuit (ASIC). In addition, the implementations described herein may be implemented in, for example, a method or a process, an apparatus, a software program, a data stream, or a signal. Even if only discussed in the context of a single form of implementation (e.g., discussed only as a method), the implementation of features discussed may also be implemented in other forms (e.g., an apparatus or program). A device may be implemented with appropriate hardware, software, and firmware, etc. A method may be implemented in a device, such as a processor, which generally refers to a processing device including, for example, a computer, microprocessor, integrated circuit, or programmable logic device. Processors also include communication devices such as computers, cell phones, personal digital assistants (PDAs) and other devices that facilitate communication of information between end-users.

## Claims

1. A system for vehicle steering, the system comprising:
a steering module, wherein a user terminal is configured to be mountable on and dismountable from the same;
a vehicle corner module provided for each of wheels so that steering of each of the wheels may be independently operated; and
a processor configured to independently control steering of each of the wheels through the vehicle corner module based on steering information received from the user terminal.

2. The system of claim 1, wherein, while the vehicle is driving, the processor receives a steering angle through a gyro sensor embedded in the user terminal and controls an operation of the vehicle corner module to perform normal driving, diagonal driving, turn driving, and reverse-phase driving of the vehicle.

3. The system of claim 2, wherein, while the vehicle is engaged in path-based driving, the processor identifies a travel path of the vehicle and controls rear wheel steering for the next path-based driving.

4. The system of claim 1, 2, or 3, wherein, while the vehicle is stationary, the processor receives touch input of a driver through the user terminal and controls an operation of the vehicle corner module to perform crab driving, pivot turn driving, and zero turn driving of the vehicle.

5. The system of claim 4, wherein the crab driving, pivot turn driving, and zero turn driving of the vehicle are performed even when the user terminal is dismounted from the steering module.

6. The system of claim 4, or 5, wherein, during the crab driving of the vehicle, the processor displays, through the user terminal, locations where the crab driving is possible and controls the vehicle driving to a location received through drag input of the driver.

7. The system of claim 4, 5, or 6, wherein, during the pivot turn driving of the vehicle, upon receiving drag input in a clockwise or counterclockwise direction through the user terminal, the processor displays a possible candidate status and performs pivot turn driving by fixing one module, among the vehicle corner modules, selected through user input.

8. The system of any one of claims 4 to 7, wherein, during the zero turn driving of the vehicle, upon receiving, through the user terminal, rotation input based on a plurality of touch inputs, the processor controls rotation of the vehicle by a rotation angle corresponding to the rotation input.

9. The system of any one of claims 1 to 8, wherein, upon detecting that the user terminal has been demounted from the steering module while the vehicle is driving, the processor executes departed driver rescue & exit maneuver to park on a shoulder of a road through slow driving and autonomous driving.

10. A method for vehicle steering comprising:
determining, by a processor, a driving status of a vehicle;
receiving, by the processor, steering information from a user terminal; and
controlling independently, by the processor, steering of each of wheels through a vehicle corner module depending on whether the user terminal is mounted or dismounted from a steering module, wherein the vehicle corner module is provided for each of the wheels and configured to independently operate the steering of each of the wheels.
